# EUROPÄISCHE PATENTSCHRIFT

(11) **EP 4 464 521 B1**
(45) Veröffentlichungstag und Bekanntmachung des Hinweises auf die Patenterteilung: **29.04.2026**
(21) Anmeldenummer: 24169660.8
(22) Anmeldetag: 11.04.2024
(51) Int. Cl.: B60B 30/10, B60B 30/02

(54) **RANGIERHILFE FÜR FAHRZEUGE**
MANEUVERING AID FOR VEHICLES
AIDE AU STATIONNEMENT POUR VÉHICULES

(30) Priorität: 11.05.2023 DE 202023102546 U
(43) Veröffentlichungstag der Anmeldung: 20.11.2024
(73) Patentinhaber: WS Wieländer + Schill Engineering GmbH & Co. KG, 78609 Tuningen (DE)
(72) Erfinder: Reitzig, Klaus, Schalksmühle (DE)
(74) Vertreter: Friderichs, Gunther

(56) Entgegenhaltungen:
- EP-A2- 0 317 044
- US-A- 2 222 910
- US-A- 2 974 931
- US-A- 4 690 605

## Beschreibung

### Gebiet der Erfindung

Die Erfindung betrifft eine Rangierhilfe für Fahrzeuge, insbesondere für Kraftfahrzeuge.

### Hintergrund der Erfindung

Rangierhilfen für Fahrzeuge werden insbesondere im Werkstattbereich eingesetzt. So sind aus der Praxis Rangierhilfen bekannt, welche Räder sowie aufeinander zu bewegbare Arme umfassen. Die Arme greifen von beiden Seiten unter das Fahrzeugrad. Durch ein aufeinander zubewegen der Arme wird das Fahrzeugrad angehoben. Das Fahrzeugrad steht nunmehr, auf den Lagerrollen der Rangierhilfe über dem Boden schwebend auf den Rädern der Rangierhilfe. Sofern unter jedem Rad eine Rangierhilfe angeordnet ist, kann das Fahrzeug händisch auch auf engem Raum in beliebiger Richtung verschoben werden.

Aus der Praxis bekannte Rangierhilfen verfügen zumeist über einen Hydraulikmechanismus, der über einen Fußhebel betätigbar ist. Ein derartiges Hydrauliksystem ist, jedenfalls, wenn dieses qualitativ hochwertig ausgestaltet sein soll, aufwendig herzustellen. Zudem muss eine Hydraulik regelmäßig gewartet werden und es kann durch am Hydraulikkolben vorbei strömendes Hydrauliköl zu Druckverlusten kommen.

Das Dokument EP 0 317 044 A2 zeigt eine Rangierhilfe mit einem Zahnstangenantrieb. Das Dokument US 4 690 605 A zeigt eine Rangierhilfe mit einem Teleskoprohr, das über einen Hebel zusammengeschoben werden kann. Die Dokumente US 2 222 910 A und US 2 974 931 zeigen Hubstangen, welche insbesondere im Fahrzeugbereich zum Ausbeulen oder zum Abstützen verwendet werden können.

### Aufgabe der Erfindung

Der Erfindung liegt demgegenüber die Aufgabe zugrunde, eine zuverlässige Rangierhilfe sowie einen Press- und/oder Spreizmechanismus bereitzustellen, bei dem auf eine aufwendige Hydraulik verzichtet werden kann. Es ist eine weitere Aufgabe der Erfindung, eine Rangierhilfe bereitzustellen, welche flexibel für unterschiedliche Radgrößen verwendbar ist und/oder welche eine verbesserte Standsicherheit, insbesondere auch auf unebenen Böden, hat.

### Zusammenfassung der Erfindung

Die Aufgabe der Erfindung wird bereits durch eine Rangierhilfe für Fahrzeuge nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Rangierhilfe für Fahrzeuge, insbesondere für Kraftfahrzeuge. Die Rangierhilfe umfasst Räder sowie zwei aufeinander zubewegbare Arme. Die Räder der Rangierhilfe sind vorzugsweise um 360° um eine vertikale Achse drehbar. So kann das Fahrzeug in beliebiger Richtung verschoben werden.

Die Arme umfassen vorzugsweise jeweils zumindest eine, besonders bevorzugt jeweils zwei Rollen und sind seitlich unter dem Fahrzeugrad anlegbar.

Durch aufeinander Zubewegen der Arme ist das Fahrzeugrad anhebbar.

Die Rangierhilfe umfasst einen Mechanismus mit einem Hebel, über den die Arme aufeinander zubewegbar sind. Der Hebel kann insbesondere als Fußhebel ausgebildet sein.

Der Mechanismus umfasst eine vorzugsweise glatte Stange. Die Stange sitzt in einer Führung und ist mittels einer Vorschubmechanik des Hebels bewegbar.

Hierfür wird ein auf die Stange greifendes Schiebeorgan verwendet, welches schrittweise beim Drücken des Hebels die Stange bewegt.

Insbesondere kann der Hebel hierzu einen Fortsatz umfassen, welcher in eine Ausnehmung des Schiebeorgans greift und dieses bei Herunterdrücken des Hebels ein Stück bewegt. Dabei greift das Schiebeorgan klemmend auf die Stange.

Beim Vorschieben ist also das Schiebeorgan durch einen Reibschluss mit der Stange gekoppelt.

Nach einem Hub kehrt der Hebel insbesondere mittels einer Feder wieder in seine Ausgangsposition zurück. Das Schiebeorgan fährt ebenfalls, vorzugsweise durch Federkraft, zurück und kann nunmehr für den nächsten Hub mittels des Hebels verschoben werden.

Während des Vorschiebens wird das Schiebeorgan derart verkippt, dass dieses klemmend auf die Stange greift. Dies kann insbesondere dadurch realisiert sein, dass der Hebel von einer Seite auf das Schiebeorgan greift, so dass dieses bei einem Hub klemmend anliegt. Wird keine Kraft mehr auf den Hebel ausgeübt, löst sich die Klemmung und das Schiebeorgan kann, vorzugsweise über eine Feder, ebenfalls in seine Ausgangsposition zurückkehren.

Der Mechanismus umfasst des Weiteren ein Stoporgan, mittels dessen die Stange am Ende des Hubs festklemmbar ist.

Das Stoporgan kann ebenfalls verkippbar ausgebildet sein. Beim Betätigen des Hebels wird die Stange entgegen der klemmenden Verkippung des Stoporgans bewegt und kann so daher in eine Richtung, nämlich die Richtung zum aufeinander zubewegen der Arme verschoben werden. Das Stoporgan verhindert aber durch eine klemmende Verbindung mit der Stange, dass diese sich beim Anheben des Fahrzeugs zurückbewegt. So kann das Fahrzeug, funktionell vergleichbar mit einem hydraulischen Pumpmechanismus, schrittweise angehoben werden. Durch die Verwendung von zwei separaten Organen, nämlich des Schiebeorgans für das Verschieben der Stange und des Stoporgans für das Festhalten der Stange kann ein Mechanismus bereitgestellt werden, welcher sich auch zum Anheben hoher Lasten, insbesondere von über 750 kg bei gleichzeitig geringer erforderlicher Druckkraft auf den Hebel eignet.

Die Stange kann innen hohl sein. Vorzugsweise besteht die Stange aus Vollmaterial.

Weiter ist die Stange gemäß der Erfindung kreiszylindrisch ausgebildet. Aufgrund einer kreiszylindrischen Ausgestaltung kann die Stange zumindest dann, wenn diese nicht klemmend festgelegt ist, gegenüber ihrer Aufnahme verdreht werden. Hierdurch kann insbesondere ermöglicht werden, dass die Arme der Rangierhilfe zueinander verdrehbar sind. Die Arme der Rangierhilfe passen sich so beim Anlegen an das Fahrzeug auch unebenen Untergründen an.

Vorzugsweise ist das Stoporgan zum Ablassen des Fahrzeugs freigebbar, insbesondere über einen Freigabehebel.

Der Freigabehebel kann beispielsweise einen Exzenter oder eine mit dem Freigabehebel gekoppelte Halbwelle umfassen, der bzw. die das Stoporgan entgegen seiner Verkippung verschwenkt und so die Klemmung freigibt. Die Arme der Rangierhilfe werden dabei durch die Gewichtskraft des Fahrzeugs wieder auseinander bewegt. Nach dem Absenken des Fahrzeugs kann die Rangierhilfe wiederum seitlich vom Fahrzeug wegbewegt werden.

Auch das Stoporgan ist vorzugsweise gegen eine Federvorspannung verkippbar.

Eine Feder zum Zurückdrücken des Schiebeorgans und/oder zur klemmenden Anlage des Stoporgans kann insbesondere auf der Stange selbst geführt sein. Dies ermöglicht eine besonders kompakte und robuste Ausgestaltung des Mechanismus zum Bewegen der Stange.

Zur klemmenden Anlage hat gemäß einer Ausführungsform de Erfindung das Schiebeorgan und/oder das Stoporgan eine Durchgangsbohrung mit einer, vorzugsweise zwei gegenüberliegenden Klemmflächen an einer Seitenwand. Die Klemmung erfolgt also nicht an den Kanten der Durchgangsbohrung, sondern an deren Seitenwand. Bei einer geeigneten Dimensionierung von Stange und Durchgangsbohrung verformen sich Stange und/oder Durchgangsbohrung derart, dass nicht die Kanten, sondern die gegenüberliegenden Seitenwände der Durchgangsbohrung an der Stange anliegen. So wird vermieden, dass sich auch bei hohen Kräften die Kanten der Durchgangsbohrung nicht in die Stange eindrücken.

Das Durchgangsloch hat einen gegenüber dem Außendurchmesser der Stange größeren Durchmesser, insbesondere einen 0,05 bis 0,5 mm, vorzugsweise 0,15 bis 0,25 mm größeren Durchmesser.

Gemäß einem weiteren Aspekt betrifft die Offenbarung eine Rangierhilfe für Fahrzeuge, insbesondere wie diese vorstehend beschrieben wurde.

Die Rangierhilfe umfasst ebenfalls Räder sowie zwei aufeinander zubewegbare Arme, wobei die Arme seitlich unter einem Fahrzeugrad anlegbar sind. Das Fahrzeugrad ist durch aufeinander zubewegen der Arme anhebbar, wobei die Arme mittels eines Hebels aufeinander zubewegbar sind.

Gemäß der Offenbarung sind die Arme gegeneiner verschwenkbar ausgebildet.

Wie vorstehend bereits beschrieben, kann sich so die Rangierhilfe auch unebenen Untergründen anpassen.

Vorzugsweise wird die Schwenkbarkeit der Arme durch eine kreiszylindrisch ausgebildete Stange bereitgestellt, welche mittels des Hebels verschiebbar ist. Ein Arm ist dabei an der Stange und der andere Arm an der Stangenaufnahme angeordnet.

Gemäß einem weiteren Aspekt der Offenbarung betrifft diese eine Rangierhilfe für Fahrzeuge, insbesondere, wie diese vorstehend beschrieben wurde.

Diese umfasst ebenfalls aufeinander zubewegbare Arme, mittels denen das Fahrzeug anhebbar ist.

Gemäß der Offenbarung ist einer der Arme verschiebbar an der Stange angeordnet.

Der Arm kann an seinem einen Ende, insbesondere mittels einer Klemme mit der Stange verbunden sein. Die Klemme kann gelöst werden und so kann der Arm auf der Stange verschoben werden.

Die Rangierhilfe lässt sich so auf sehr flexible Weise unterschiedlichen Radgrößen anpassen und ist so hinsichtlich der Anpassbarkeit an die Größe des Fahrzeugrades nicht durch den maximalen Hub der Stange limitiert.

Gemäß einem weiteren Aspekt betrifft die Offenbarung einen Press- und/oder Spreizmechanismus.

Der Press- und/oder Spreizmechanismus ist insbesondere für vorstehend beschriebene Rangierhilfe ausgebildet und dient demzufolge dem aufeinander Zubewegen der Arme durch einen Pressmechanismus.

Der Mechanismus umfasst eine Stange, welche mittels eines auf ein Schiebeorgan greifenden Hebels schrittweise bewegbar ist.

Das Schiebeorgan umfasst ein Durchgangsloch für die Stange, wobei die Seitenwand des Durchgangslochs zumindest eine, vorzugsweise zwei gegenüberliegende Klemmflächen aufweist.

Gemäß der Offenbarung springt eine Vorderkante des Durchgangslochs im Bereich der Klemmfläche in axialer Richtung in das Durchgangsloch zurück.

Eine vordere und/oder hintere Kante des Durchgangslochs liegt also nicht auf einer Ebene, sondern springt im Bereich der Klemmfläche nach innen zurück.

Es hat sich herausgestellt, dass hierdurch die Klemmwirkung des Schiebeorgans erheblich verbessert werden kann.

Dies ist vermutlich darauf zurückzuführen, dass beim Verkippen des Schiebeorgans die Kante des Durchgangslochs nicht punktuell im mittleren Bereich der Klemmfläche zur Anlage kommt, sondern dass sich die Kräfte entlang der Kante über einen größeren Umfang gleichmäßiger verteilen.

Durch ein Verbiegen der Stange und/oder des Durchgangslochs dient die Seitenwand des Durchgangslochs als Klemmfläche und die Kante des Durchgangslochs drückt sich nicht in die Stange ein.

Der Press- und/oder Spreizmechanismus umfasst vorzugsweise ebenfalls ein Stoporgan, wie dieses vorstehend beschrieben wurde.

Das Durchgangsloch des Stopporgans ist vorzugsweise wie das Durchgangsloch des Schiebeorgans ausgebildet und umfasst eine Vorderkante, welche im Bereich der Klemmfläche in axialer Richtung in das Durchgangsloch zurückspringt.

Neben einer Verwendung für vorstehend beschriebene Rangierhilfe kann der Press- und/oder Spreizmechanismus aber auch für andere Baugruppen verwendet werden. Beispielsweise kann ein Wagenheber bereitgestellt werden, welcher im Unterschied zu vorstehend beschriebener Rangierhilfe nicht am Fahrzeugrad, sondern am Fahrzeugboden angreift. Der Press- und/oder Spreizmechanismus kann beispielsweise auch für Stützen zum Abstützen von Decken und dergleichen oder für eine Klemme verwendet werden. Die zurückspringende Vorderkante kann insbesondere dadurch bereitgestellt werden, dass diese U- oder bogenförmig zurückspringt.

Die Vorderkante kann im Sinne der Offenbarung auch abgerundet ausgebildet sein.

Gemäß einer Ausführungsform springt die Vorderkante über einen Umfangswinkel von 90 bis 270°, vorzugsweise von 150 bis 220° zurück.

Der Rücksprung wird gemäß einer Ausführungsform der Erfindung durch eine stirnseitig in das Schiebeorgan greifende Ausnehmung bereitgestellt, die an den Seiten ausläuft.

Die Ausnehmung erstreckt sich mithin nur über einen Teil des Umfangswinkels der Kante des Durchgangslochs.

Durch ein U- oder bogenförmiges Auslaufen geht der Rücksprung vorzugsweise nicht stufenförmig, sondern graduell in die Kante des Durchgangslochs über.

Vorzugsweise umfasst das Durchgangsloch auf beiden Seiten einen Rücksprung.

Dieser befindet sich jeweils auf der gegenüberliegenden Seite und ist somit angrenzend an die Klemmfläche der Seitenwand der Durchgangsbohrung angeordnet.

### Kurzbeschreibung der Zeichnungen

Der Gegenstand der Erfindung soll im Folgenden bezugnehmend auf die Zeichnungen Fig. 1 bis Fig. 15 näher erläutert werden.
Fig. 1 ist eine perspektivische Ansicht einer Rangierhilfe, wie diese an einem Fahrzeug verwendet wird.
Fig. 2 ist eine perspektivische Ansicht der Rangierhilfe allein.
Fig. 3 ist eine Detailansicht der Rangierhilfe auf den Bereich zum aufeinander Zubewegen der Arme.
Fig. 4 ist eine Detailansicht mit ausgeblendetem Gehäuse.
Fig. 5 ist eine Detailansicht des Pressmechanismus in einem Längsschnitt.
Fig. 6 ist eine weitere Detailansicht mit ausgeblendetem Gehäuse.
Fig. 7 und Fig. 8 sind perspektivische Ansichten des Schiebeorgans.
Fig. 9 bis Fig. 12 sind aufgeschnittene Ansichten des Schiebeorgans.
Fig. 13 und Fig. 14 sind perspektivische Ansichten des Stoporgans.
Fig. 15 ist ein Längsschnitt des Stoporgangs.

### Detaillierte Beschreibung der Zeichnungen

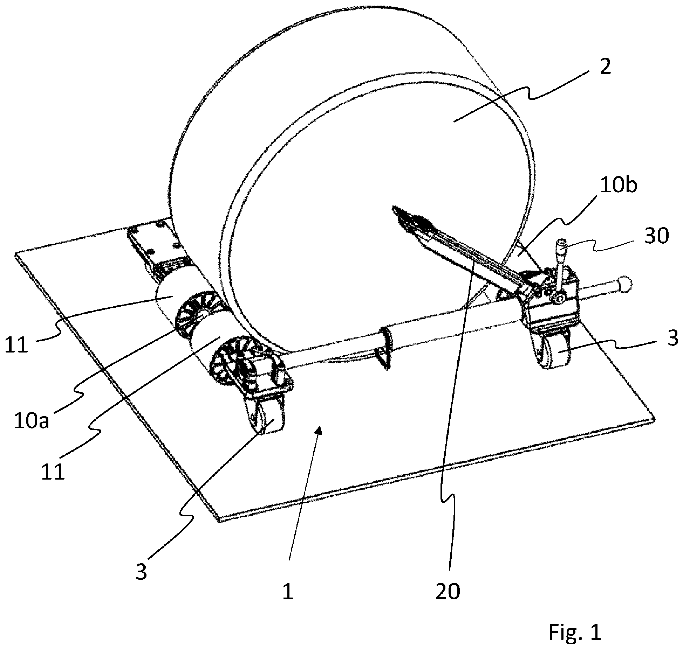

Fig. 1 zeigt in einer perspektivischen Ansicht eine Rangierhilfe 1, wie diese zum Anheben eines Fahrzeugs verwendet wird. Von dem Fahrzeug ist lediglich das Fahrzeugrad 2 dargestellt.

Die Rangierhilfe 1 ist U-förmig ausgebildet und umfasst die beiden Arme 10a, 10b, welche über einen Pressmechanismus aufeinander zubewegbar sind.

Unter den Enden der Arme sind um 360° auf einer vertikalen Achse drehbare Räder 3 angeordnet.

Jeder Arm umfasst zwei drehbare Rollen 11, die auf den Armen 10a, 10b verschiebbar sind.

Die Rollen 11 sind ebenfalls auf den Armen 10a, 10b verschiebbar, um die Rangierhilfe unterschiedlichen Reifenbreiten anzupassen.

Die Arme 10a, 10b werden unten seitlich am Fahrzeugrad 2 angelegt.

Sodann tritt der Benutzer auf den Hebel 20 und die Arme 10a, 10b bewegen sich schrittweise aufeinander zu. Das Fahrzeugrad 2 wird so vom Boden angehoben. Ausgestattet mit einer Rangierhilfe an jedem Fahrzeugrad 2 kann sodann das Fahrzeug auf den Rädern 3 der Rangierhilfe 1 bewegt werden.

Zum Ablassen des Fahrzeugs kann der Benutzer den Freigabehebel 30 betätigen. Bei Betätigung des Freigabehebels 30 können sich die Arme 10a, 10b wieder auseinander bewegen. Die Arme 10a, 10b werden durch die Gewichtskraft des Fahrzeugs auseinander gedrückt und so das Fahrzeug wieder abgesenkt.

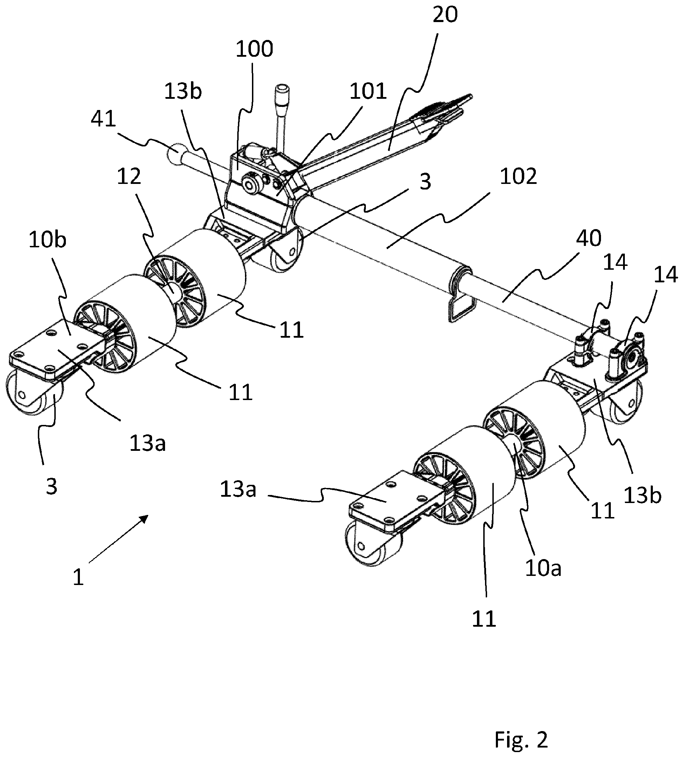

Fig. 2 ist eine perspektivische Ansicht der Rangierhilfe 1. Die Rangierhilfe 1 ist U-förmig ausgebildet.

Als Mechanismus zum aufeinander Zubewegen der Arme 10a, 10b dient ein Pressmechanismus 100. Der Pressmechanismus 100 umfasst ein Gehäuse 101, welches an einem Ende des Arms 10b angeordnet ist.

In dem Gehäuse 101 ist der Hebel 20 schwenkbar gelagert.

Durch Betätigen des Hebels 20 kann die im Führungsrohr 102 geführte Stange 40 schrittweise eingezogen werden.

Hierdurch bewegt sich der Arm 10a auf den Arm 10b zu.

Die Stange 40 ist durch das Gehäuse 101 geführt und umfasst auf der dem Arm 10a gegenüberliegenden Seite einen Anschlag 41.

Die Stange 40 ist kreiszylindrisch ausgebildet und kann im Führungsrohr 102 verdreht werden. So können die Arme 10a, 10b auf einer mit der Mittelachse der Stange 40 korrespondierenden Achse verschwenkt werden.

Die Enden der Arme 10a, 10b werden durch Radträger 13a, 13b gebildet. Auf einem der Radträger 13b ist das Gehäuse 101 des Pressmechanismus angeordnet.

Zwischen den Radträgern 13a, 13b erstreckt sich jeweils die Achse 12 der Arme 10a, 10b.

Die beiden Rollen 11 sind jeweils auf der Achse 12 verschiebbar.

Der Arm 10a ist mittels Klemmen 14, die an dem Radträger 13b angeordnet sind, mit der Stange 40 verbunden. Durch Lockern der Schrauben der Klemmen 14 können diese gelöst werden. Der Radträger 13b des Arms 10a kann so entlang der Stange 14 verschoben und durch Anziehen der Klemmen 14 wieder fixiert werden. So lässt sich die Rangierhilfe in verbesserter Weise unterschiedlichen Radgrößen anpassen.

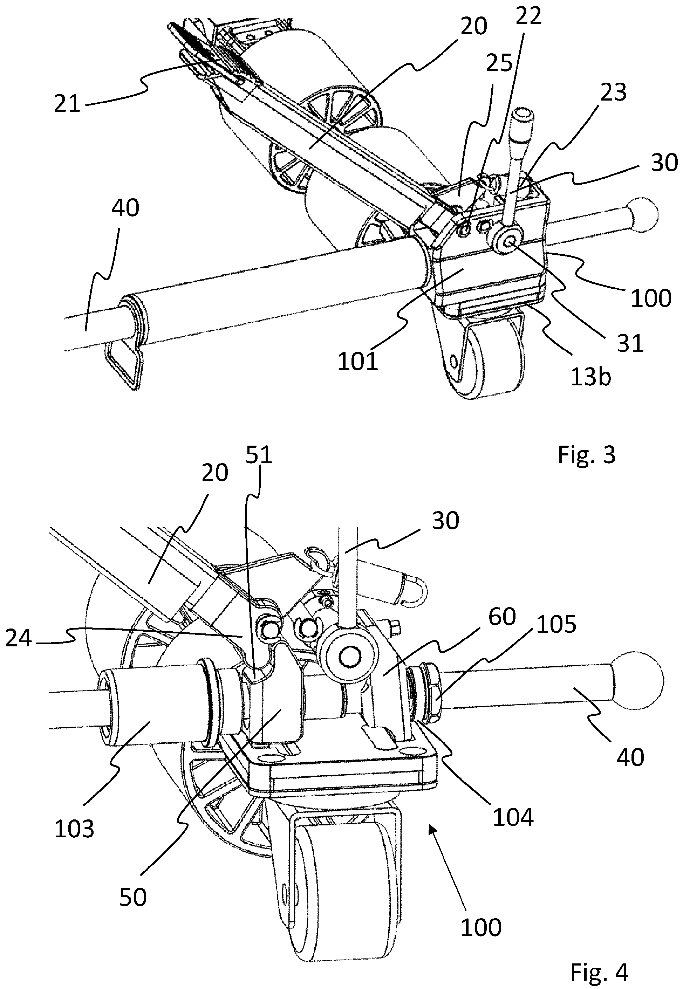

Fig. 3 ist eine Detaildarstellung des Bereichs des Pressmechanismus 100.

Der Hebel 20 ist schwenkbar in der im Gehäuse 101 geführten Achse 22 angeschlagen. Der Hebel 20 umfasst eine Fußauflage 21, um diesen herunterzudrücken.

Über die Feder 23, welche auf einer Seite mit dem Gehäuse 101 verbunden ist und auf der anderen Seite am Arm 25 des Hebels 22 angreift, wird der Hebel 20 nach dem Herunterdrücken wieder in die hier dargestellte Ausgangsposition zurückbewegt. Mit dem Herunterdrücken des Hebels 20 wird die Stange 40 schrittweise bewegt.

Der Freigabehebel 30 umfasst eine Achse 31, welche ebenfalls im Gehäuse 101 geführt ist.

Fig. 4 ist eine perspektivische Ansicht des Bereichs des Pressmechanismus 100, wobei nunmehr der Oberteil des Gehäuses ausgeblendet ist.

Zu erkennen ist nunmehr, dass die Stange 40 in einer Führung 103, welche in das Führungsrohr eingesetzt ist, gelagert ist.

Zum Verschieben der Stange 40 umfasst der Mechanismus das Schiebeorgan 50, welches über den Hebel 20 verschiebbar ist.

Hierzu umfasst der Hebel 20 einen abgerundeten Fortsatz 24, welcher von oben in eine Ausnehmung 51 des Schiebeorgans 50 greift.

So wird das Schiebeorgan 50 über den Fortsatz 20 verschoben. Da der Fortsatz 24 von einer Seite, nämlich von oben, angreift, wird das Schiebeorgan 50 gleichzeitig beim Verschieben verkippt, wodurch es klemmend auf der Stange 40 zur Anlage kommt.

Auf der Stange ist ebenfalls ein Stoporgan 60 angeordnet.

Das Stoporgan 60 sitzt unten in einer Ausnehmung 104 des unteren Gehäuseteils des Pressmechanismus. Das Stoporgan 60 ist aufgrund einer Federvorspannung verkippt. Beim Verschieben der Stange 40 über das Schiebeorgan 50 wird das Stoporgan 60 entgegen der Verkippung bewegt, so dass die Klemmverbindung beim Verschieben der Stange 40 freigegeben wird. Am Ende eines Hubs geht das Stoporgan 60 aufgrund einer Klemmverbindung wiederum einen Reibschluss mit der Stange 40 ein und hält die Stange 40 fest.

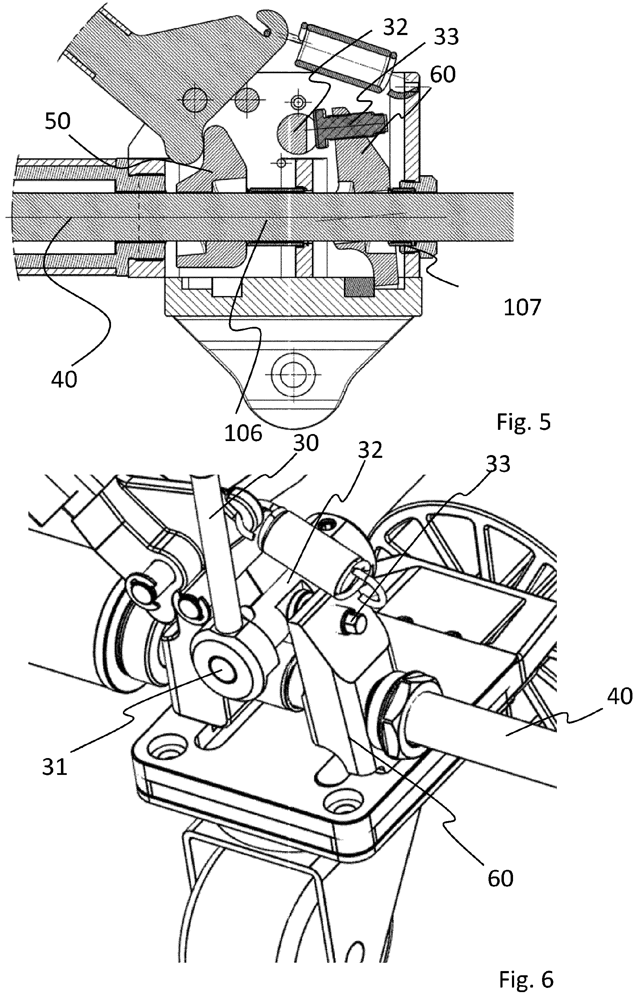

Eine in das Gehäuse geschraubte Kappe 105 hält eine Feder unter Vorspannung, die das Stoporgan in Sperrposition hält (107 in Fig. 5).

Fig. 5 ist ein mittig durch die Stange 40 verlaufender Längsschnitt des Pressmechanismus mit dem Schiebeorgan 50 und dem Stoporgan 60. Fig. 6 ist eine perspektivische Ansicht mit ausgeblendetem Gehäuse.

Das Schiebeorgan 50 wird beim Verschieben der Stange 40 gegen die Vorspannung der Feder 106 bewegt. Die Feder 106 ist als Spiralfeder ausgebildet und auf die Stange geschoben.

Das Stoporgan 60 wird durch die ebenfalls auf der Stange 40 geführte Spiralfeder 107 in der hier dargestellten verkippten Position gehalten und geht so, wenn das Schiebeorgan nicht bewegt wird, einen Reibschluss mit der Stange ein.

Der Freigabehebel 30 umfasst eine Achse 31 mit einem Halbwellenabschnitt 32, der über eine Koppelstange 33 mit dem Stoporgan 60 gekoppelt ist.

Beim Betätigen des Freigabehebels 30 aus der hier dargestellten Position in eine Freigabeposition wird die Verkippung des Stoporgans 60 gelöst, indem die Koppelstange, angetrieben durch den Halbwellenabschnitt 33, das Stoporgan 60 aus der verkippten Position heraushebelt und so den Reibschluss löst.

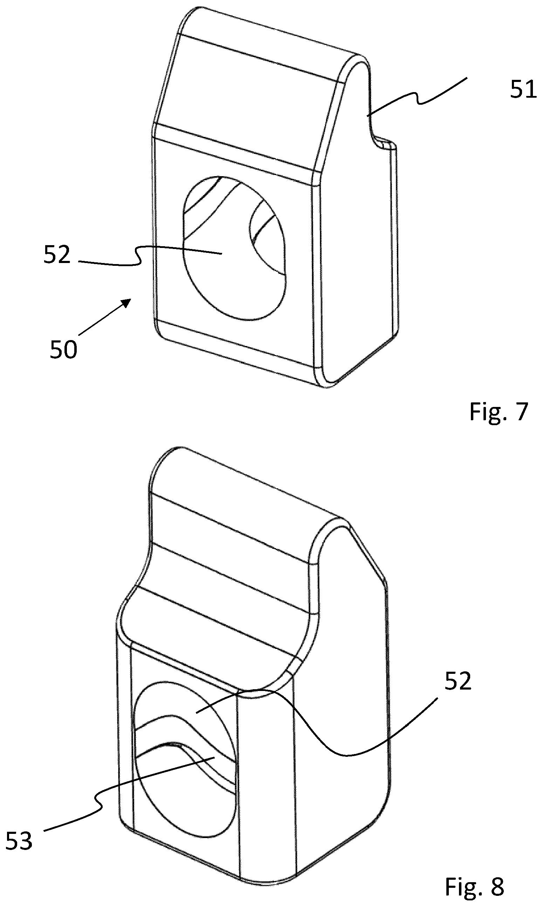

Fig. 7 und Fig. 8 sind perspektivische Ansichten des Schiebeorgans 50.

Das Schiebeorgan 50 umfasst zum einen ein Durchgangsloch 52, durch das die Stange geführt ist.

Weiter umfasst das Schiebeorgan 50 eine Ausnehmung 51, in die der Fortsatz des Hebels greift.

Wie in Fig. 8 dargestellt, ist an der Kante des Durchgangslochs ein Rücksprung 53 vorgesehen, der die klemmende Anlage des Schiebeorgans 50 verbessert. Die Klemmfläche wird durch den an den Rücksprung angrenzenden Bereich des Durchgangslochs 52 gebildet. Es versteht sich, dass es sich bei der Klemmfläche nicht um einen geometrisch klar abgegrenzten Bereich handelt, sondern dass dieser u.a. von der anliegenden Kraft sowie der kraftbedingten Verformung von Schiebeorgan 50 und Stange abhängt.

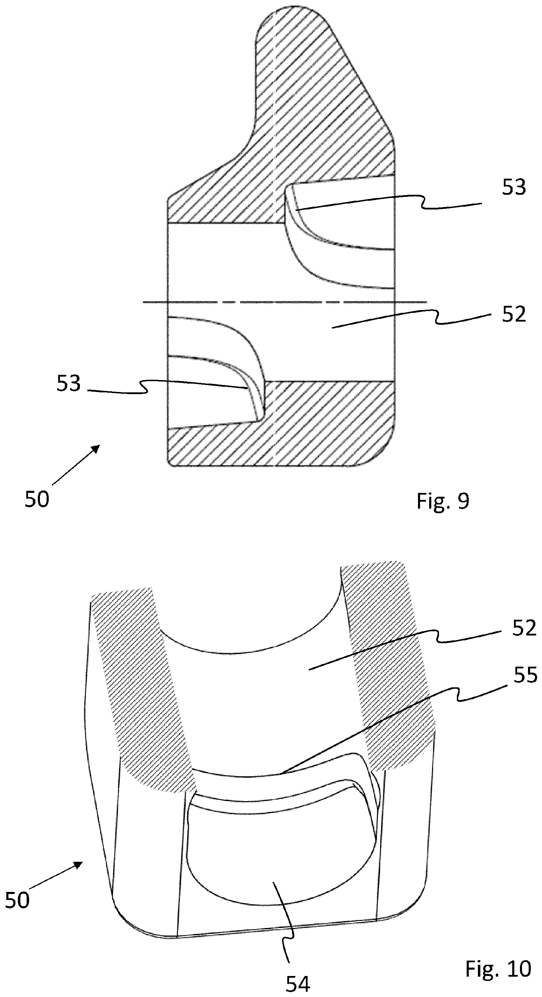

Fig. 9 ist ein mittiger Längsschnitt des Schiebeorgans 50. Im Bereich des Rücksprungs 53 ist eine Ausnehmung vorhanden, die den Durchmesser des Durchgangslochs über einen Teilabschnitt des Umfangs vergrößert.

Ein derartiger Rücksprung 53 ist auf zwei gegenüberliegenden Seiten jeweils oben und unten.

Das eigentliche Durchgangsloch 52, welches klemmend an der Stange angelegt werden kann, erstreckt sich jeweils nur bis zum Rücksprung 53.

Wie in der aufgeschnittenen Ansicht gemäß Fig. 10 zu erkennen, verläuft die Kante 55 des Durchgangslochs 52 U-förmig. Die Ausnehmung 54 läuft bezogen auf den Umfang an den Seiten aus.

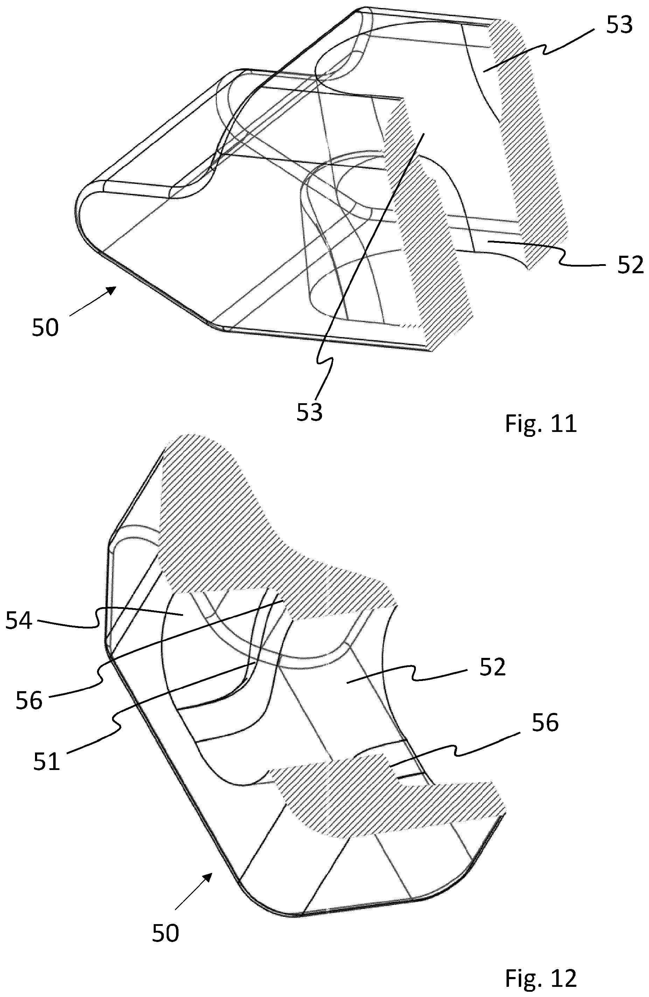

Wie in der aufgeschnittenen Ansicht gemäß Fig. 11 dargestellt, läuft der Rücksprung 53 nach und nach aus. Der Rücksprung 53 kann insbesondere durch eine Einfräsung des Schiebeorgans 50 an der Stirnseite des Durchgangslochs 52 bereitgestellt werden.

Wie in Fig. 12 in einer aufgeschnittenen Ansicht dargestellt, läuft so das Durchgangsloch 52 bis zu einer Stufe 56, welche durch die Ausnehmung 51 bereitgestellt wird. Da die Ausnehmung 51 über den Umfang ausläuft, verringert sich die Höhe der Stufe 51 graduell bis hin zu einem Abschnitt der Kante des Durchgangslochs, bei dem die Kante auf einer Ebene liegt.

Vorzugsweise erstreckt sich die Ausnehmung 54 über etwa die Hälfte des Umfangs des Durchgangslochs 52.

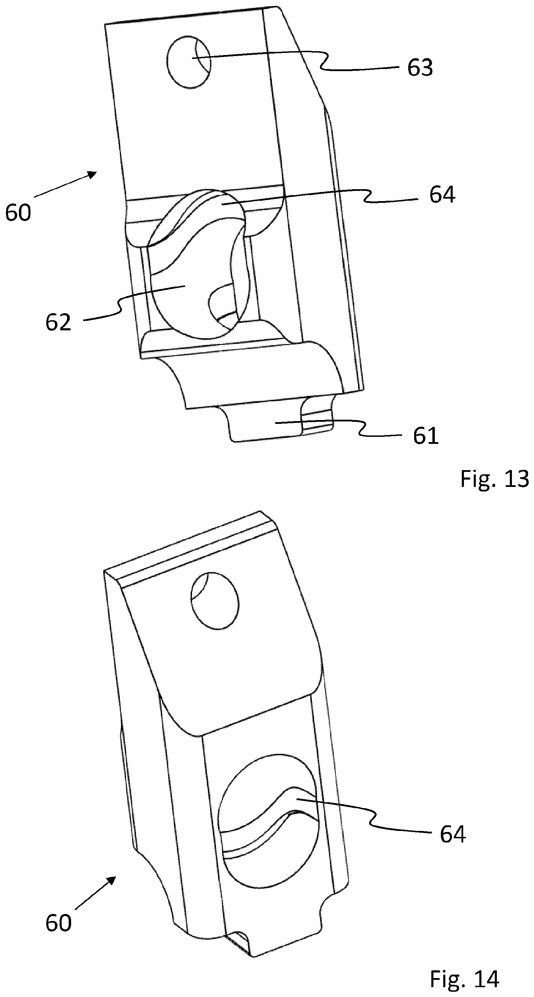

Fig. 13 und Fig. 14 sind perspektivische Ansichten des Stoporgans 60.

Das Stoporgan 60 umfasst im Unterschied zu dem Schiebeorgan auf seiner Unterseite einen Fortsatz 61, mittels dessen das Stoporgan 60 in das Gehäuse des Pressmechanismus eingesetzt ist.

An der Oberseite befindet sich ein Durchgangsloch 63, in welches die Koppelstange für den Freigabehebel greift.

Das Durchgangsloch 62 ist entsprechend des Durchgangslochs des Schiebeorgans ausgebildet und umfasst ebenfalls auf zwei gegenüberliegenden Seiten einen Rücksprung 64, welcher entsprechend des Schiebeorgans ausgebildet ist.

Schiebeorgan und Stoporgan 60 arbeiten in unterschiedlicher Richtung, d.h. wenn das Schiebeorgan reibschlüssig mit der Stange verbunden ist, wird beim Bewegen der Reibschluss des Stoporgans 60 entgegen einer Federvorspannung gelöst.

Beim Zurückbewegen des Hebels hält das Stoporgan 60 aufgrund eines Reibschlusses die Stange fest, wobei der Reibschluss des Schiebeorgans gelöst wird.

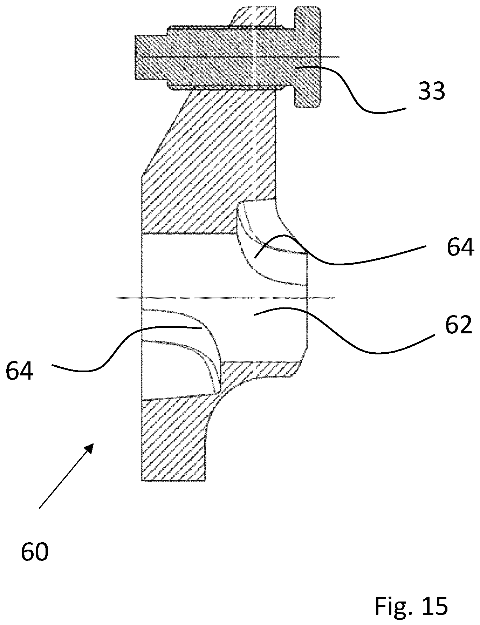

Fig. 15 ist ein Fig. 9 entsprechender Längsschnitt des Stoporgans 60 nebst Koppelstange 33.

Entsprechend des Schieborgans umfasst die Kante des Durchgangslochs 62 diagonal gegenüberliegend jeweils einen Rücksprung 64, der um seinem Umfang in Richtung der der Klemmfläche gegenüberliegenden Seite ausläuft.

Durch die Erfindung konnte eine robuste flexibel verwendbare und einfach aufgebaute Rangierhilfe für Fahrzeuge bereitgestellt werden.

### Bezugszeichenliste

- 1: Rangierhilfe
- 2: Fahrzeugrad
- 3: Rad
- 10a, 10b: Arm
- 11: Rolle
- 12: Achse
- 13a, 13b: Radträger
- 14: Klemme
- 20: Hebel
- 21: Fußauflage
- 22: Achse
- 23: Rückholfeder
- 24: Fortsatz
- 25: Arm
- 30: Freigabehebel
- 31: Achse
- 32: Halbwellenabschnitt
- 33: Koppelstange
- 40: Stange
- 41: Anschlag
- 50: Schiebeorgan
- 51: Ausnehmung
- 52: Durchgangsloch
- 53: Rücksprung
- 54: Ausnehmung
- 55: Kante
- 56: Stufe
- 60: Stoporgan
- 61: Fortsatz
- 62: Durchgangsloch
- 63: Durchgangsloch (für Koppelstange)
- 64: Rücksprung
- 100: Pressmechanismus
- 101: Gehäuse
- 102: Führungsrohr
- 103: Führung
- 104: Ausnehmung
- 105: Kappe
- 106: Feder (Schiebeorgan)
- 107: Feder (Stoporgan)

## Patentansprüche

1. Rangierhilfe (1) für Fahrzeuge, welche Räder (3) sowie zwei aufeinander zubewegbare Arme (10a, 10b) umfasst, wobei die Arme (10a, 10b) seitlich unter einem Fahrzeugrad (2) anlegbar sind, wobei das Fahrzeugrad (2) durch aufeinander zubewegen der Arme (10a, 10b) anhebbar ist, wobei die Arme (10a, 10b) mittels eines Hebels (20) aufeinander zubewegbar sind,
wobei die Arme (10a, 10b) mittels eines Mechanismus aufeinander zubewegbar sind, **dadurch gekennzeichnet, dass** der Mechanismus eine kreiszylindrische Stange (40) umfasst, die beim Drücken des Hebels (20) mittels eines auf die Stange (40) greifenden Schiebeorgans (50) schrittweise bewegbar ist und über ein Stoporgan (60) festklemmbar ist, wobei während eines Vorschiebens der Stange (40) das Schiebeorgan (50) derart verkippt wird, dass dieses klemmend auf die Stange (40) greift.

2. Rangierhilfe (1) nach dem vorstehenden Anspruch, **dadurch gekennzeichnet, dass** zum Ablassen des Fahrzeugs das Stoporgan (60) über einen Freigabehebel freigebbar ist.

3. Rangierhilfe (1) nach einem der vorstehenden Ansprüche, **dadurch gekennzeichnet, dass** die Arme (10a, 10b) Rollen (11) umfassen, insbesondere entlang der Arme (10a, 10b) verschiebbare Rollen (11).

4. Rangierhilfe (1) nach dem nach einem der vorstehenden Ansprüche, **dadurch gekennzeichnet, dass** das Schiebeorgan (50) gegen eine Federvorspannung bewegbar ist.

5. Rangierhilfe (1) nach dem nach einem der vorstehenden Ansprüche, **dadurch gekennzeichnet, dass** das Stoporgan (60) gegen eine Federvorspannung verkippbar ist.

6. Rangierhilfe (1) nach dem nach einem der vorstehenden Ansprüche, **dadurch gekennzeichnet, dass** das Schiebeorgan (50) und/oder das Stoporgan (60) eine Durchgangsbohrung mit zumindest einer, vorzugweise zwei, Klemmflächen an der Seitenwand aufweist.

7. Rangierhilfe (1) nach einem der vorstehenden Ansprüche, **dadurch gekennzeichnet dass** die Arme (10a, 10b) gegeneinander verschwenkbar ausgebildet sind.

8. Rangierhilfe (1) nach einem der vorstehenden Ansprüche, **dadurch gekennzeichnet dass** einer der Arme (10a, 10b) verschiebbar an der Stange (40) angeordnet ist.

9. Rangierhilfe (1)nach einem der vorstehenden Ansprüche,
**dadurch gekennzeichnet, dass** das Schiebeorgan (50) ein Durchgangloch (52) für die Stange (40) aufweist, wobei die Seitenwand des Durchgangslochs (52) zumindest eine Klemmfläche für die Stange (40) umfasst,
wobei eine Vorderkante des Durchgangslochs (52) im Bereich der Klemmfläche in axialer Richtung in das Durchgangsloch (52) zurückspringt.

10. Rangierhilfe (1) nach dem vorstehenden Anspruch, **dadurch gekennzeichnet, dass** die Vorderkante U- oder bogenförmig zurückspringt.

11. Rangierhilfe (1) nach einem der vorstehenden Ansprüche 9 oder 10, **dadurch gekennzeichnet, dass** die Vorderkante über einen Umfangswinkel von 90 bis 270°, vorzugsweise vom 150 bis 220°, zurückspringt.

12. Rangierhilfe (1) nach einem der vorstehenden Ansprüche 9 bis 11, **dadurch gekennzeichnet, dass** der Rücksprung (64) durch eine stirnseitig in das Schiebeorgan (50) greifende Ausnehmung bereitgestellt ist, die an den Seiten ausläuft.

13. Rangierhilfe (1) nach einem der vorstehenden Ansprüche 9 bis 12, **dadurch gekennzeichnet, dass** das Durchgangsloch (52) kreiszylindrisch ausgebildet ist.

14. Rangierhilfe (1) nach dem vorstehenden Anspruch, **dadurch gekennzeichnet, dass** Durchgangsloch (52) einen gegenüber dem Außendurchmesser der Stange (40) 0,05 bis 0,5 mm, vorzugsweise 0,15 bis 0,25 mm größeren Durchmesser aufweist.

## Claims

1. A maneuvering aid (1) for vehicles, comprising wheels (3) and two arms (10a, 10b) that are moveable towards one another, wherein the arms (10a, 10b) can be positioned laterally under a vehicle wheel (2), wherein the vehicle wheel (2) can be lifted by moving the arms (10a, 10b) towards one another, wherein the arms (10a, 10b) can be moved towards one another using a lever (20);
wherein the arms (10a, 10b) can be moved towards one another using a mechanism; **characterised in that** the mechanism comprises a circular-cylindrical rod (40) which, upon actuation of the lever (20), can be moved incrementally by means of a sliding member (50) that engages around the rod (40) and can be clamped using a stopping member (60),
wherein, during advancement of the rod (40), the sliding member (50) is tilted in such a manner that it frictionally clamps onto the rod (40).

2. The maneuvering aid (1) according to the preceding claim, **characterised in that** the stopping member (60) can be released using a release lever for lowering the vehicle.

3. The maneuvering aid (1) according to any one of the preceding claims, **characterised in that** the arms (10a, 10b) comprise rollers, in particular rollers that can be displaced along the arms (10a, 10b).

4. The maneuvering aid (1) according to any one of the preceding claims, **characterised in that** the sliding member (50) is movable against a spring bias.

5. The maneuvering aid (1) according to any one of the preceding claims, **characterised in that** the stopping member (60) is tiltable against a spring bias.

6. The maneuvering aid (1) according to any one of the preceding claims, **characterised in that** the sliding member (50) and/or the stopping member (60) has a through-bore with at least one, preferably two clamping surfaces on a side wall thereof.

7. The maneuvering aid (1) according to any one of the preceding claims, **characterised in that** the arms (10a, 10b) are configured to be pivotable relative to one another.

8. The maneuvering aid (1) according to any one of the preceding claims,
**characterised in that** one of the arms (10a, 10b) is arranged so as to be displaceable on the rod (40).

9. The maneuvering aid (1) according to any one of the preceding claims,
**characterised in that** the sliding member (50) has a through-hole (52) for the rod (40), wherein the side wall of the through-hole (52) comprises at least one clamping surface for the rod (40),
wherein a front edge of the through-hole (52) is set back in an axial direction into the through-hole (52) in the area of the clamping surface

10. The maneuvering aid (1) according to the preceding claim, **characterised in that** the front edge is set back in a U-shape or arc shape.

11. The maneuvering aid (1) according to any one of the preceding claims 9 or 10, **characterised in that** the front edge is set back over a perimeter angle of 90° to 270°, preferably 150° to 220°.

12. The maneuvering aid (1) according to any one of the preceding claims 9 to 11, **characterised in that** the setback (64) is defined by a recess that extends into the sliding member (50) from end faces thereof and terminates at lateral sides thereof.

13. The maneuvering aid (1) according to any one of the preceding claims 9 to 12, **characterised in that** the through-hole (52) has a circular cylindrical shape.

14. The maneuvering aid (1) according to any one of the preceding claim, **characterised in that** the through-hole (52) has a diameter that is larger by 0.05 to 0.5 mm, preferably by 0.15 to 0.25 mm, than the outer diameter of the rod (40).

## Revendications

1. Aide au manœuvre (1) pour véhicules, comprenant des roues (3) ainsi que deux bras (10a, 10b) étant rapprochables l'un vers l'autre, lesdits bras (10a, 10b) étant applicables latéralement sous une roue de véhicule (2), la roue de véhicule (2) pouvant être soulevée par rapprochement des bras (10a, 10b), les bras (10a, 10b) étant rapprochables l'un vers l'autre au moyen d'un levier (20),
les bras (10a, 10b) étant rapprochables l'un vers l'autre au moyen d'un mécanisme, **caractérisée en ce que**
le mécanisme comprend une tige cylindrique circulaire (40), laquelle, lors de l'appui sur le levier (20), peut être déplacée par étapes au moyen d'un organe coulissant (50) s'engageant sur la tige (40) et pouvant être fixée par serrage au moyen d'un organe d'arrêt (60), dans lequel, pendant une avancée de la tige (40), l'organe coulissant (50) est incliné de telle manière qu'il s'engage par serrage sur la tige (40).

2. Aide au manœuvre (1) selon la revendication précédente, **caractérisée en ce que**, pour l'abaissement du véhicule, l'organe d'arrêt (60) peut être libéré au moyen d'un levier de libération.

3. Aide au manœuvre (1) selon l'une quelconque des revendications précédentes, **caractérisée en ce que** les bras (10a, 10b) comprennent des rouleaux (11), en particulier des rouleaux (11) déplaçables le long des bras (10a, 10b).

4. Aide au manœuvre (1) selon l'une quelconque des revendications précédentes, **caractérisée en ce que** l'organe coulissant (50) est mobile à l'encontre d'une force de rappel d'un ressort.

5. Aide au manœuvre (1) selon l'une quelconque des revendications précédentes, **caractérisée en ce que** l'organe d'arrêt (60) est basculable à l'encontre d'une force de rappel d'un ressort.

6. Aide au manœuvre (1) selon l'une quelconque des revendications précédentes, **caractérisée en ce que** l'organe coulissant (50) et/ou l'organe d'arrêt (60) présente une ouverture traversante comportant au moins une, de préférence deux, surfaces de serrage sur sa paroi latérale.

7. Aide au manœuvre (1) selon l'une quelconque des revendications précédentes, **caractérisée en ce que** les bras (10a, 10b) sont réalisés de manière à être pivotables l'un par rapport à l'autre.

8. Aide au manœuvre (1) selon l'une quelconque des revendications précédentes, **caractérisée en ce que** l'un des bras (10a, 10b) est disposé de manière coulissante sur la tige (40).

9. Aide au manœuvre (1) selon l'une quelconque des revendications précédentes, **caractérisée en ce que** l'organe coulissant (50) présente un orifice traversant (52) pour la tige (40), la paroi latérale de l'orifice traversant (52) comprenant au moins une surface de serrage pour la tige (40), l'orifice traversant (52) comprenant, dans la zone de la surface de serrage, un bord avant en retrait dans la direction axiale.

10. Aide au manœuvre (1) selon la revendication précédente, **caractérisée en ce que** le bord avant est en retrait selon une forme en U ou en arc.

11. Aide au manœuvre (1) selon l'une quelconque des revendications 9 ou 10, **caractérisée en ce que** le bord avant est en retrait sur un angle de circonférence de 90 à 270°, de préférence de 150 à 220°.

12. Aide au manœuvre (1) selon l'une quelconque des revendications 9 à 11, **caractérisée en ce que** le retrait (64) est formé par un évidement s'engageant frontalement dans l'organe coulissant (50) et s'évasant latéralement.

13. Aide au manœuvre (1) selon l'une quelconque des revendications 9 à 12, **caractérisée en ce que** l'orifice traversant (52) est conçu de manière cylindrique circulaire.

14. Aide au manœuvre (1) selon la revendication précédente, **caractérisée en ce que** l'orifice traversant (52) présente un diamètre supérieur de 0,05 à 0,5 mm, de préférence de 0,15 à 0,25 mm, par rapport au diamètre extérieur de la tige (40).
